# EUROPEAN PATENT APPLICATION

(11) **EP 4 597 808 A1**
(43) Date of publication of application: **06.08.2025**
(21) Application number: 23873030.3
(22) Date of filing: 25.09.2023
(51) Int. Cl.: H02K 15/12, B05C 3/109, B05C 13/02, B05C 9/08

(54) **DEVICE FOR IMPREGNATING VARNISH INTO HAIRPIN IN STATOR OF ELECTRIC MOTOR**

(30) Priority: 28.09.2022 KR 20220123265
(71) Applicant: Hyundai Mobis Co., Ltd., Gangnam-gu Seoul 06141 (KR)
(72) Inventor: KANG, Do Hoon, Uiwang-si, Gyeonggi-do 16080 (KR); KIM, Dae Yeul, Seoul 07946 (KR); BAN, Young Dong, Yongin-si, Gyeonggi-do 17066 (KR); LEE, Woo Jae, Suwon-si, Gyeonggi-do 16663 (KR)
(74) Representative: Jung, Minkyu
(86) International application number: PCT/KR2023/014671
(87) International publication number: WO 2024/071913

(57) **Abstract**

This invention relates to an impregnation device for impregnating varnish into portions of a hairpin which is mounted on a stator of an electric motor and exposed from both lengthwise end portions of the stator. The impregnation device of the invention comprises: a first support mechanism abutting around an outer surface of a stator core to support the stator; a second support mechanism on which the first support mechanism is rotatably mounted around the axis of the stator; a first rotation mechanism for rotating the first support mechanism around the axis of the stator core; a heating mechanism which extends through the stator core, moves in the axial direction of the stator core, and is placed on the portions of the hairpin exposed from both end portion in the longitudinal direction of the stator core to heat the portions of the hairpin; a movable mechanism for moving the heating mechanism in the axial direction of the stator core; and an application tool for applying varnish to the portions of the hairpin exposed from both ends in the longitudinal direction of the stator core.

## Description

### [Technical Field]

The present invention relates to a device for impregnating hairpins in a stator of an electric motor with a varnish, and more specifically, to a device which coats hairpin portions exposed from both ends of a core of a stator of an electric motor, which includes hairpins instead of a wound coil, with a varnish and allows the varnish to gel to form an insulating film.

### [Background Art]

Hybrid vehicles or electric vehicles are vehicles driven by rotational forces of electric motors provided as driving forces. In an electric motor used in such a vehicle, hairpins each having a quadrangular cross-sectional shape are inserted into a core of a stator and are used as a wound wire of the stator in order to generate large rotational force with small weight and volume.

Hairpins, each of which is formed in a "U" shape and coated with an insulator, are inserted into a core of a stator, leading ends of the protruding hairpins are formed to be twisted such that the hairpins, which should be electrically connected, are brought into contact with each other, coated portions are removed, and the hairpins are welded. After the leading ends of the hairpins are welded, welded portions are coated with an insulating resin such as epoxy and are insulated from each other.

However, such insulation-coating has a problem that coated portions are delaminated from a welding portion, which is weak in mechanical stiffness, and an externally exposed portion of a stator core due to an external force or vibrations applied to an electric motor or removed by scratching or the like.

Accordingly, a method of impregnating an outer side of an insulation-coated portion of a hairpin portion, which is externally exposed from both ends of a core of a stator, with a varnish to protect the insulation-coated portion is being performed.

As an example of a varnish impregnation device, Korean Patent Publication No. 10-2022-0040088 (Document 1) titled "Varnish impregnation device of hair pin type stator" is disclosed.

In the invention of Document 1, a stator core is fixed to a leading end of a bracket driven to be tilted and rotated, is tilted and rotated, and is coated with a varnish, and the stator core is coupled to the bracket by inserting a chucking rod into a bolt coupling hole of the stator core.

However, in such a configuration, since the bracket is rotated and tilted in a state in which the heavy stator core is fixed to the leading end of the bracket, the bracket should have significant stiffness and strength and be very heavy, and since moment of rotational inertia of the bracket and the stator core become large, a drive motor should have high driving force.

Accordingly, the impregnation device of the invention of Document 1 has problems that a high specification and high price drive motor is used, manufacturing costs are increased, and it is difficult to control a rotation angle.

### [Technical Problem]

The present invention is directed to providing an impregnation device for impregnating leading ends of hairpins, which are exposed from both ends of a core of a stator of an electric motor, which includes the hairpins instead of a wound coil, with a varnish.

Specifically, the present invention is intended to solve the above-described problems of the conventional technology and directed to providing an impregnation device with a configuration in which fixation and movement of a stator core for varnish impregnation are easy so that manufacturing costs are reduced and operation control is easy.

### [Technical Solution]

The above-described objects to be solved by the present invention are achieved by an impregnation device according to one aspect of the present invention which impregnates portions of hairpins, which are mounted in a stator of an electric motor and exposed from both end portions of the stator in a longitudinal direction, with a varnish.

An impregnation device according to one aspect of the present invention includes
a first support unit which is in contact with an outer circumferential surface of a stator core and supports the stator, a second support unit to which the first support unit is mounted to be rotatable about an axis of the stator, a first rotating unit which rotates the first support unit about an axis of the stator core, a heating unit which passes through the stator core, moves in an axial direction of the stator core, is disposed around portions of hairpins exposed from both end portions of the stator core in a longitudinal direction, and heats the portions of the hairpins, a moving unit which moves the heating unit in the axial direction of the stator core, and a coating unit which coats the portions of the hairpins, which are exposed from both end portions of the stator core in the longitudinal direction, with a varnish.

In an impregnation device according to one aspect of the present invention, the stator is moved into a first support unit by a transfer robot or a worker and supported by the first support unit.

Slots are formed in the stator core, the hairpins are inserted into the slots, in a state in which leading ends of the hairpins are exposed from the slots, insulation-coated portions are removed, each pair of leading ends are welded, then insulation coating is performed again, and connection portions of the hairpins are exposed from the stator core at a side opposite to the leading ends.

When the stator is supported by the first support unit, the first support unit is rotated by a first rotating unit, the stator rotates about an axis of the stator, and in such a rotating state, a coating unit coats the portions of the hairpins, which are exposed from the stator core in a longitudinal direction, with a varnish.

After the varnish coating is performed, a heating unit moves in an axial direction of the stator core to the portions of the hairpins coated with the varnish and heats and cures the varnish. The heating unit may heat the portions of the hairpins disposed at a side at which the heating unit is disposed and pass through the stator and heat and cure the portions of the hairpins disposed at a side opposite to the heating unit with respect to the stator.

As features of an impregnation device according to one aspect of the present invention,
a first support unit includes a main body having a ring shape whose center is an axis of a stator core, wherein a through hole in which the stator core is disposed is formed inside the main body, and a plurality of support pads, which move in a diameter direction toward an outer surface of the stator core, are formed in the through hole to be spaced apart from each other in a circumferential direction.

In this configuration, in a state in which the support pads retract outward in a diameter direction, a stator is disposed between the support pads by a transfer robot or the like, and the support pads are moved and brought into contact with the outer surface of the stator core to support the stator core.

As additional features of an impregnation device according to one aspect of the present invention, an outer surface of a first support unit is formed as a circular circumferential surface, and a plurality of bearing units which are in contact with circumferential surfaces of a first ring and a second ring of the first support unit and perform rolling movement and whose both sides in a width direction protrude to prevent separation of the first ring and the second ring to support rotation movement of the first support unit are provided on a second support unit to be spaced apart from each other in a circumferential direction.

On a circumference of the first support unit, the bearing units of the second support unit allow the first support unit to be supported and maintained by the second support unit and allow the first support unit to be rotated with respect to the second support unit.

As features of an impregnation device with such a configuration according to one aspect of the present invention,
a first support unit includes a first ring constituting a main body and a second ring which is disposed parallel to the first ring in an axial direction, formed in a ring shape whose center is an axis of a stator core, and provided to be rotatable about the axis of the stator core with respect to the first ring,
a second rotating unit which rotates the second ring with respect to the first ring is provided,
support pads are disposed in and coupled to the first ring to be movable in a diameter direction and pressed by elastic members provided in the first ring to be brought into contact with an outer surface of the stator core, and
cam grooves, which are inclined and operated to press the support pads outward in the diameter direction by rotation of the second ring with respect to the first ring such that the support pads are spaced apart from the stator core, are provided in the second ring, wherein a guide member, which is inserted into each of the cam grooves and moved along the cam groove in the diameter direction according to the rotation of the second ring with respect to the first ring, is provided in each of the support pads.

As additional features of an impregnation device according to one aspect of the present invention,
a second support unit may be rotatable such that an axis of a stator is tilted with respect to a ground surface, and the present invention may further include a third rotating unit which rotates the second support unit such that the axis of the stator core is tilted with respect to the ground surface.

According to the additional characteristic configuration,
in a state in which the stator core is supported by a first support unit, a second rotating unit may rotate the second support unit to tilt the axis of the stator core with respect to the ground surface such that portions of hairpins to be coated with a varnish are disposed upward, and while the first support unit is rotated about the axis of the stator core by a first rotating unit, a coating unit may coat the portions of the hairpins of the stator core disposed upward with the varnish.

According to such a configuration and operation, as the stator is tilted, the coated varnish on the hairpins may flow into slots of the stator core into which the hairpins are inserted to fill empty spaces between the hairpins and the slots.

As embodiment forms relating to the additional features,
an impregnation device according to one aspect of the present invention may further include a support frame disposed on a ground surface,
a second support unit may include a rotating shaft disposed parallel to the ground surface and perpendicular to an axis of a stator core and a rotating arm disposed on the support frame to be rotatable about the rotating shaft and rotated with the rotating shaft, and a third rotating unit may be configured to rotate the second support unit by pushing or pulling the rotating arm with respect to the support frame.

### [Description of Drawings]

FIG. 1 is a perspective view illustrating a stator to be impregnated with a varnish using an impregnation device of one embodiment of the present invention.
FIGS. 2 and 3 are front and rear perspective views illustrating the impregnation device according to one embodiment of the present invention.
FIGS. 4 and 5 are a perspective view and a rear view illustrating a portion of each a first support unit and a second support unit by cutting a portion of each of a second ring and a bearing plate.
FIGS. 6 to 15 are views sequentially showing processes of impregnating hairpins of the stator with the varnish using the impregnation device of the embodiment of the present invention.

### [Modes of the Invention]

Hereinafter, a configuration and operation of a varnish impregnation device of an embodiment according to one aspect of the present invention will be described as specific content for implementing an impregnation device according to one aspect of the present invention.

Unless otherwise defined throughout the following description and specification, all terms referring to an axial direction, a diameter direction, and a circumferential direction are based on a stator of an electric motor which is impregnated with a varnish by an impregnation device of the present invention.

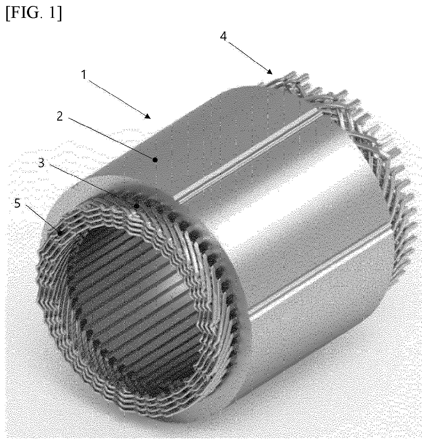

First, a configuration of a stator 1 to be impregnated with a varnish using a varnish impregnation device of an embodiment will be described with reference to FIG. 1.

As is well known, in the stator 1 adopting a hairpin type winding, a plurality of slots into which hairpins 3 are inserted are formed in a steel core 2 along rows and columns in the diameter direction and the circumferential direction, the hairpins 3 each processed in a "U" shape and coated with an insulator are inserted into the slots, and then coated portions of leading ends are removed, the leading ends are bent, and the leading ends of each pair of hairpins are brought into contact with each other and welded, so that a current flows between the hairpins.

After the welding is performed, leading ends 4 of the hairpins, from which the coated portions are removed, are coated with an insulator and welded in the impregnation device of the embodiment, and the leading ends 4 protruding from the core 2 and connection portions 5 protruding toward an opposite side in a longitudinal direction of the core 2 and having a "U" shape are coated with the varnish and heated to gel so that exposed end portions of the hairpins are coated with the varnish.

The stator 1 whose leading ends 4 of the hairpins are completely welded is transferred to the impregnation device of the embodiment by a transfer robot (not shown) or worker and mounted thereon for varnish impregnation.

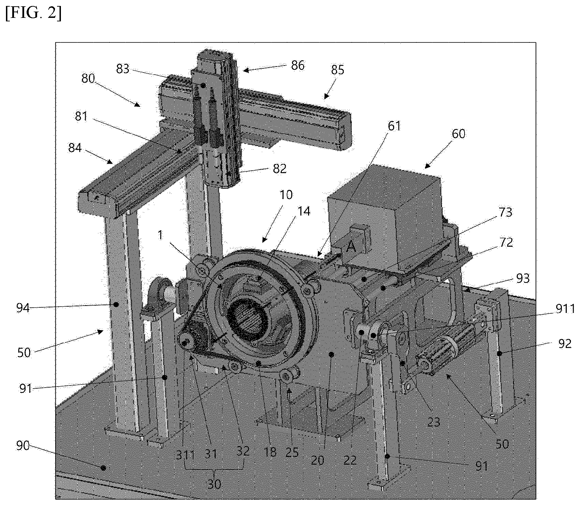

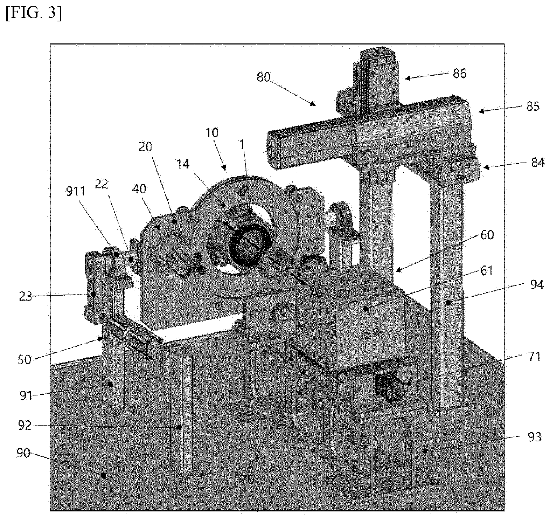

Next, an overall configuration of the varnish impregnation device of the embodiment will be described with reference to FIGS. 2 and 3 which are front and rear perspective views illustrating the impregnation device according to one embodiment of the present invention.

The impregnation device of the embodiment mainly includes
a first support unit 10 in contact with an outer circumferential surface of the core 2 of the stator to support the core, a second support unit 20 on which the first support unit is mounted rotatably about an axis A of the core and which is rotatably provided such that the axis A of the core is tilted with respect to a ground surface, a first rotating unit 30 which is mounted on the second support unit and rotates the first support unit 10 about the axis A of the core 2, a first pneumatic cylinder 40 provided as a second rotating unit which is in contact with the outer surface of the core 2 and allows a plurality of support pads 14 provided on the first support unit to move in the diameter direction such that the stator 1 is fixedly supported by the first support unit 10, a second pneumatic cylinder 50 provided as a third rotating unit which rotates the second support unit 20 such that the axis A of the core 2 is tilted with respect to the ground, a heating unit 60 which moves to pass through the core 20 in an axial direction of the core, is disposed around the leading ends 3 and the connection portions 4 of the hairpins exposed from both end portions of the core in the longitudinal direction, and heats the coated varnish with high frequency waves, a moving unit 70 which moves the heating unit 60 in the axial direction of the core 2, a coating unit 80 which coats the leading ends 4 and the connection portions 5 of the hairpins with the varnish, and components 90 to 95 constituting a frame on which the above-described units are mounted to allow the units to be disposed on the ground surface.

As parts of the frame, a bed 90 having a flat panel shape is provided and disposed on the ground surface, and two first frames 91 on which the second support unit 20 is rotatably mounted and supported may be disposed in parallel on the bed 90 to extend vertically from the bed 90.

The second support unit 20 is formed in a panel shape and substantially disposed perpendicular to the ground surface, and a through hole having a circular shape matching with a circumference of the first support unit 10 is provided in a center of the second support unit 20.

Hinge shafts 22 protruding outward in a width direction are provided on both ends of the second support unit 20 in the width direction, bearings 911 supporting the hinge shafts 22 are provided on the first frames 91, and thus the hinge shafts 22 are rotatably supported by the bearings 911.

Accordingly, the second support unit 20 rotates about the hinge shafts 22 to be rotatable between a vertical state and a tilted state with respect to the ground surface.

A rotating arm 23 is coupled to a leading end of one of the hinge shafts 22. A second frame 92, which vertically stands up on the bed 90, is disposed behind the first frame 91, and the second pneumatic cylinder 50 provided as the third rotating unit is provided between the second frame 93 and the rotating arm 23.

An end portion of the second pneumatic cylinder 50 is rotatably coupled to the second frame 92, and a leading end of a piston of the second pneumatic cylinder is rotatably coupled to a leading end of the rotating arm 23.

Accordingly, as the second pneumatic cylinder 50 expands or contracts, the piston pushes or pulls the rotating arm 23 to rotate the hinge shaft 22 so that the second support unit 20 rotates between a state in which the axis A of the stator is tilted with respect to the ground surface and a state in which the axis A of the stator is parallel to the ground surface.

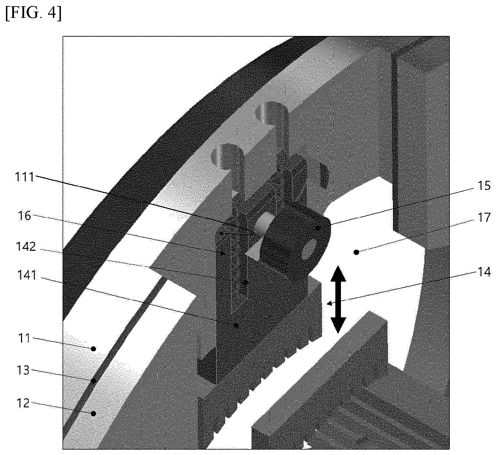

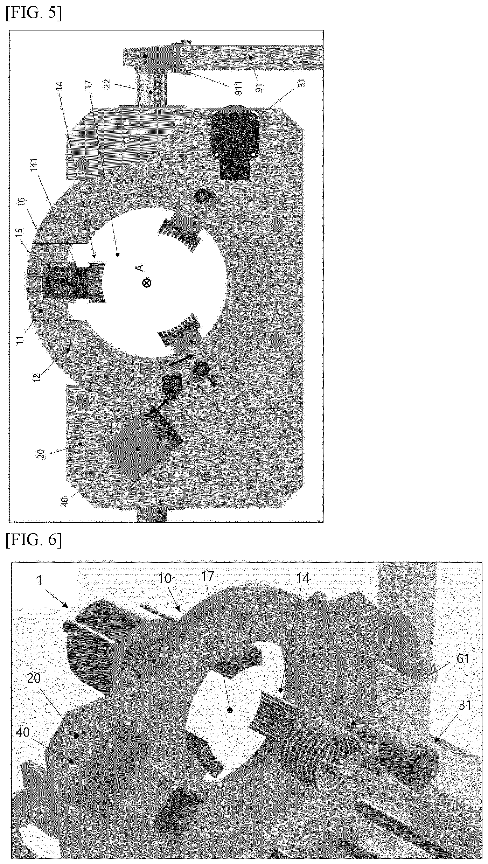

FIGS. 4 and 5, which are a perspective view and a rear view illustrating a portion of each of the first support unit 10 and the second support unit 20 by cutting a portion of each of a second ring 22 and a bearing plate 23, will now be described.

In the first support unit 10, a first ring 11 is provided as a main body formed in a ring shape whose center is the axis A of the stator 1, and similarly, a second ring 22, which is formed in a ring shape having the same diameter as the first ring 11 and is disposed to be coaxial with and parallel to the first ring 21 with a bearing plate 13 interposed therebetween, and is relatively rotatable with respect to the first ring 21, is provided. In addition, a driven pulley 24 is coaxially disposed on and fixedly coupled to the first ring 21 at a side opposite to the second ring 22.

A circular hole 17, in which the stator 1 may be disposed to pass therethrough, is formed in centers of the first ring 21, the second ring 22, and the bearing plate 23, and the stator 1 to which the hairpins 3 are assembled is transferred by the transfer robot or the worker, passes through the hole 17, and is disposed inside the first support unit 10.

Three support pads 14 spaced at equiangular intervals of 120° in the circumferential direction are disposed on the first ring 21 to be movable in the diameter direction. The support pads 14 are disposed in the hole of the centers of the first ring 21, the second ring 22, and the bearing plate 23, moved in the diameter direction, and brought into contact with the outer surface of the stator core 2, so that the stator 1 is fixedly disposed in the first support unit 10.

Each of the support pads 14 is formed in a block shape, and a surface of the support pad 14 disposed inside in the diameter direction is brought into contact with the core 2 with a sufficient friction force to fix the core 2 such that the core 2 dose not move.

Sliding blocks 141 are fixedly coupled to outer sides of the support pads 14 in the diameter direction, and sliding grooves 111, in which the sliding blocks 141 are seated and which guide the sliding of the sliding blocks 141, are formed in the first ring 21 in the diameter direction.

Two spring grooves 142 extending outward in the diameter direction are formed in each of the sliding blocks 141, and compression coil springs 16 are disposed in the two spring grooves 142. One side end portion of each of the compression coil springs 16 is in contact with an outer side end portion of the sliding groove 111 of the first ring 11 in the diameter direction, and the other side end portion thereof is in contact with a surface of an inner side end portion of the sliding groove 142 of the sliding block 141 in the diameter direction, so that the compression coil spring 16 is disposed to press the sliding block 141 inward in the diameter direction, that is, to press the sliding block 141 and the support pad 14 toward the stator 1.

Meanwhile, cam rollers 15 are attached to the sliding blocks 141 to be freely rotatable and to protrude in the axial direction, and cam grooves 121 into which the cam rollers 15 are inserted and with which the cam rollers 15 come into rolling contact are provided in the second ring 12.

Since the cam grooves 121 extend to be inclined with respect the diameter direction, when the second ring 12 rotates with respect to the first ring 11, the cam rollers 15 which perform rolling movement in the cam grooves 121 move outward or inward in the diameter direction, and thus the sliding blocks 141 also move in the diameter direction.

The first pneumatic cylinder 40 provided as the second rotating unit is disposed on a rear surface of the second support unit 20, and a pressing block 122 which is pushed by a piston 41 of the first pneumatic cylinder when the piston 41 expands is attached to a rear surface of the second ring 12.

When the first pneumatic cylinder 40 expands and the piston 41 pushes the pressing block 122, the second ring 12 rotates with respect to the first ring 11, and the cam rollers 15 in the cam grooves 121 are pressed outward in the diameter direction.

Accordingly, the sliding blocks 141 and the support pads 14 may compress the compression coil springs 16 and move outward in the diameter direction, the support pads 14 may be spaced apart from the outer surface of the stator core 2, and the stator 1 may be separated from the first support unit 10 and transferred.

When the first pneumatic cylinder 40 contracts and the piston 41 is spaced apart from the pressing block 122, the sliding blocks 141, on which the cam rollers 15 are mounted, are moved inward in the diameter direction by restoring forces of the compression coil springs 16, and thus the second ring 12 returns to an original position with respect to the first ring 11, that is, a previous position from a position to which the second ring 12 is rotated by the first pneumatic cylinder 40.

As described above, the operation in which the pressing pads 14 fixedly support the stator 1 in the device is performed according to the operation in which the compression coil springs 16 press the pressing pads 14 inward in the diameter direction, and the operation in which the pressing pads 14 are separated from the stator 1 such that the stator 1 enters or exits the device is performed according to the cam operation due to the expansion of the first pneumatic cylinder 40.

The first support unit 10 entirely supported by the second support unit 20 and rotated with respect to the second support unit 20 will be described with reference to FIGS. 2 to 3 again.

The leading ends 4 and the connection portions 5 of the hairpins 3 are exposed from the end portions of the core 2 of the stator, and the exposed portions are formed in a substantially circular shape. In order to coat the exposed portions with the varnish, a plurality of nozzles for coating with the varnish may be disposed in a circular shape, a nozzle may rotate in a circular shape, or the stator may rotate.

In the impregnation device of the embodiment, the first support unit 10 to which the stator 1 is fixed is rotated with respect to the second support unit 20.

Four support rollers 25 provided as bearing units may be disposed on the second support unit 20 around the outer circumferential surface of the first support unit 10 to be spaced apart from each other at equidistant intervals in a circumferential direction, and circumferential surfaces of the first ring 11, the second ring 12, and the bearing plate 13 disposed therebetween in a radial direction, which constitute the first support unit, are in rolling contact with the support rollers 25.

Since both sides in width directions of outer circumferential surfaces in diameter directions of the support rollers 25, which are in contact with the first ring 11, the bearing plate 13, and the second ring 12 of the first support unit, protrude outward in the diameter direction, the first support unit 10 is not separated from the support rollers 25.

A driven pulley 18 formed in a circular shape to be coaxial with the first ring 11 is fixedly attached to the first ring 11 at a side opposite to the second ring 12. In addition, a driving motor 31 constituting the first rotating unit 30 is disposed on the second support unit 20, and a timing belt 32 is wound around a driving pulley 311 of the driving motor and the driven pulley 18 of the first support unit.

Accordingly, when nozzles 81 and 82 of the coating unit perform coating with the varnish, the driving motor 31 rotates to rotate the first support unit 10 and thus rotate the stator 1 mounted thereon such that the leading ends 4 or the connection portions 5 of the hairpins on both ends of the stator are uniformly coated with the varnish even in a state in which first and second nozzles 81 and 82 are fixed.

The varnish coating apparatus 80 is disposed on two fourth frames 94 which are vertically disposed.

An X-axis actuator 84 disposed in a direction of the axis A of the stator is disposed to extend between the fourth frames 94, and the Y-axis actuator 85, which extends in a Y-axial direction perpendicular to an X-axis and parallel to the ground surface, is disposed above the X-axis actuator 84 and is moved along the X-axis by the X-axis actuator 84.

A Z-axis actuator 86 perpendicular to the ground surface is disposed on the Y-axis actuator 85 and moved along the Y-axis by the Y-axis actuator 85. A moving plate 83 may be disposed on the Z-axis actuator 86 and moved along a Z-axis by the Z-axis actuator 86.

As described above, the moving plate 83 is moved in three directions of the X-axis, Y-axis, and Z-axis by the X-axis, Y-axis, and Z-axis actuators 84, 85, and 86.

Two nozzles 81 and 82 are fixedly disposed on the moving plate 83, and the varnish is supplied to the first and second nozzles 81 and 82 from an external varnish source.

A leading nozzle end of the first nozzle 81 is tilted forward in the axial direction of the stator, and a leading nozzle end of the second nozzle 82 is tilted rearward in the axial direction of the stator.

Accordingly, the first nozzle 81 is properly configured to coat the connection portions 5 of the hairpins with the varnish from a rear side toward a front side of the stator in the axial direction, and the second nozzle 82 is properly configured to coat the leading ends 4 of the hairpins with the varnish from the front side toward the rear side of the stator in the axial direction.

The X-axis, Y-axis, and Z-axis actuators 85, 84, and 86 move such that the moving plate 83, on which the first and second nozzles 81 and 82 are mounted, is moved to a position at which the varnish coating is properly performed.

The heating unit 60 which heats the coated varnish to gel and the moving unit 70 which moves the heating unit 60 toward or away from the stator 1 are disposed on a third frame 93 provided on the bed 90.

In the heating unit 60, a high frequency wave generator 61, which receives power and generates and controls high frequency waves, is disposed above the moving unit 70, and a high frequency wave coil 62 protrudes from the high frequency wave generator toward the stator 1. The high frequency wave coil 62 may be disposed inside the connection portions 5 and the leading ends 4 of the hairpins and may be formed to have a diameter capable of passing through the inside of the core 2.

In the moving unit 70, a driving motor 71 is disposed behind the third frame 93, and a screw unit 73 allowing the high frequency wave generator 61 to be moved across the third frame 93 in the axial direction of the stator 1 by rotation of the driving motor 71 is provided under the high frequency wave generator 61. Since the screw unit 73 is a commonly used unit, specific description thereof will be omitted.

Accordingly, as the high frequency wave generator 61 moves in the axial direction of the stator 1, the high frequency wave coil 62 may be disposed inside the connection portions 5 of the hairpins or may pass through the core 2 to be disposed inside the leading ends 4 of the hairpins.

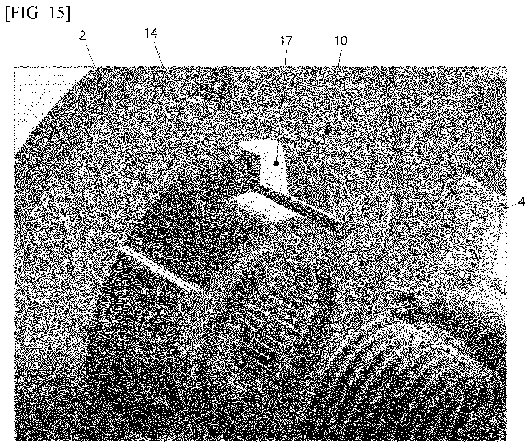

Hereinafter, the operation of the impregnation device including the above-described components will be described with reference to FIGS. 6 to 15.

FIG. 6 is a view illustrating a state in which the stator 1 to which the hairpins 3 are assembled enters the impregnation device of the embodiment.

The first support unit 10 enters a state in which the support pads 14 retract outward in the diameter direction by expansion of the first pneumatic cylinder 40 to allow the stator 1 to move into the through hole 17, and then the stator 1 is moved into the through hole 17 by the worker or the transfer robot.

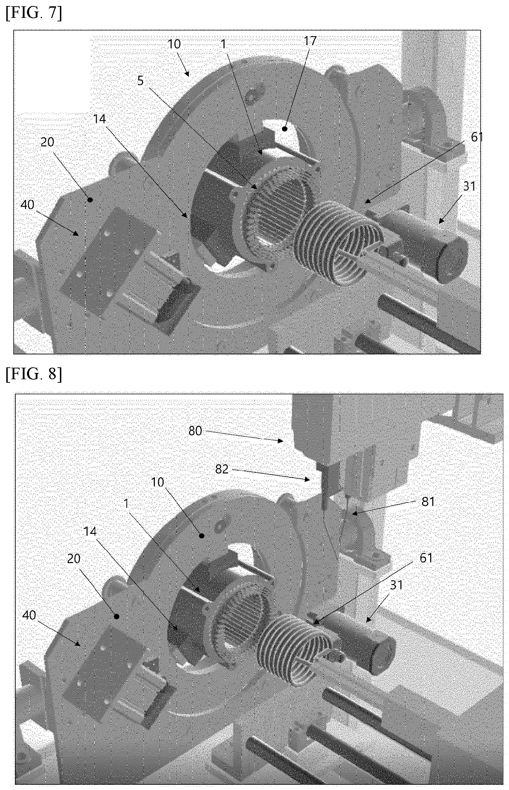

FIG. 7 is a view illustrating a state in which the stator 1 is disposed in and supported by the first support unit 10.

The first support unit 10 enters a state in which the first pneumatic cylinder 40 contracts, the support pads 14 are expanded inward in the diameter direction by the compression coil springs 16 and brought into contact with a circumferential surface of the core 2 of the stator 1 to support the stator, and thus the stator 1 is disposed in the impregnation device of the embodiment to be impregnated with the varnish.

FIG. 8 is a view illustrating a state in which the stator 1 is supported by the first support unit 10, and the varnish coating unit 80 operates to move the first and second nozzles 81 and 82 to a position of the stator 1.

The X-axis, Y-axis and Z-axis actuators 84, 85, and 86 (see FIG. 2) move the first and second nozzles 81 and 82 disposed on the moving plate 83 (see FIG. 2) to predetermined varnish coating positions.

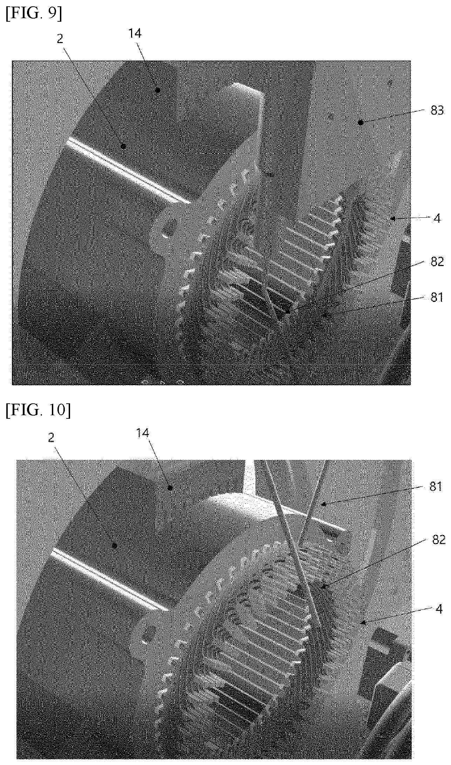

Then, as illustrated in FIG. 9, a leading end of the first nozzle 81 is disposed inside the leading ends 4 of the hairpins of the stator 1 in the diameter direction and sprays the varnish on inner surfaces of the leading ends 4 of the hairpins in the diameter direction.

The driving motor 31 of the first rotating unit 30 rotates, and then the first support unit 10 rotates in the second support unit 20 in a state in which rolling movement of the first support unit 10 is supported by the support rollers 25.

Since the first support unit 10 rotates about the axis A of the stator, the first nozzle 81 at a fixed position sprays the varnish, and the varnish is uniformly sprayed on the inner surfaces of the leading ends 4 of the hairpins.

When the varnish is completely sprayed to the inner surfaces of the leading ends of the hairpins, as illustrated in FIG. 10, the first nozzle 81 moves to outer sides of the leading ends 4 of the hairpins in the diameter direction and sprays the varnish toward the outer sides of the leading ends of the hairpins in the diameter direction. Similarly, the first support unit 10 continuously rotates to spray the varnish on outer surfaces of all the leading ends 4 of the hairpins.

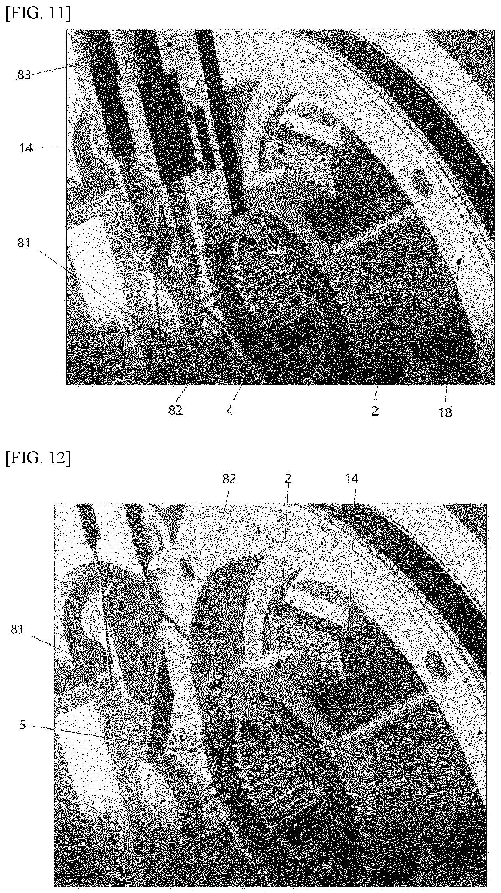

When the varnish is completely sprayed on the leading ends 4 of the hairpins, the X-axis, Y-axis, and Z-axis actuators 84, 85, and 86 (see FIG. 2) move the moving plate 83 to a front side of the first support unit 10, that is, to a side at which the hairpin connection portions 5 are disposed, and as illustrated in FIG. 11, a leading end of the second nozzle 82 is disposed toward inner sides of the hairpin connection portions 5 in the diameter direction.

While the first support unit 10 is rotated by the first rotating unit 30, inner surfaces of the hairpin connection portions 5 in the diameter direction are coated with the varnish.

Then, as illustrated in FIG. 12, the leading end of the second nozzle 82 moves to a position facing outer sides of the hairpin connection portions 5 in the diameter direction, and outer surfaces of the hairpin connection portions 5 in the diameter direction are coated with the varnish. Similarly, the first support unit 10 rotates.

Then, the exposed portions of the hairpins including the leading ends 4 and the connection portions 5 are completely coated with the varnish.

A process of curing the varnish to gel is performed after the varnish coating is completed, but before the gel process is performed, the coated varnish may fill an entrance of a hole of the core 2 into which the hairpins are inserted.

After the leading ends 4 of the hairpins are completely coated with the varnish, the coating unit 80 retracts from the stator 1, and the second pneumatic cylinder 50 provided as the third rotating unit contracts.

Accordingly, the second pneumatic cylinder 50 pulls the rotating arm 23 of the second support unit 20 to rotate the rotating shafts 22. Accordingly, the second support unit 20, the first support unit 10 coupled to the second support unit 20, and the stator 1 supported by the first support unit are tilted.

According to such tilting, the leading ends 4 of the hairpins are tilted to be disposed at an upper side, and the varnish with which the leading ends 4 are coated flows downward to fill empty spaces between an insulating paper (not shown) disposed in the slot of the core and surrounding hairpins 3 and the hairpins.

Similarly, after the connection portions 5 of the hairpins are completely coated with the varnish, the second pneumatic cylinder 50 may expand further to rotate the second support unit 20 toward an opposite side and tilt the stator 1 such that the connection portions 5 of the hairpins are disposed at an upper side. Accordingly, the varnish with which the connection portions 5 are coated fills spaces between the hole of the core 2 and the hairpins or between the insulating paper and the hairpins.

When the hairpins including the leading ends 4 and the connection portions 5 and the empty spaces are completely coated with the varnish, the process of curing the coated varnish to gel is performed.

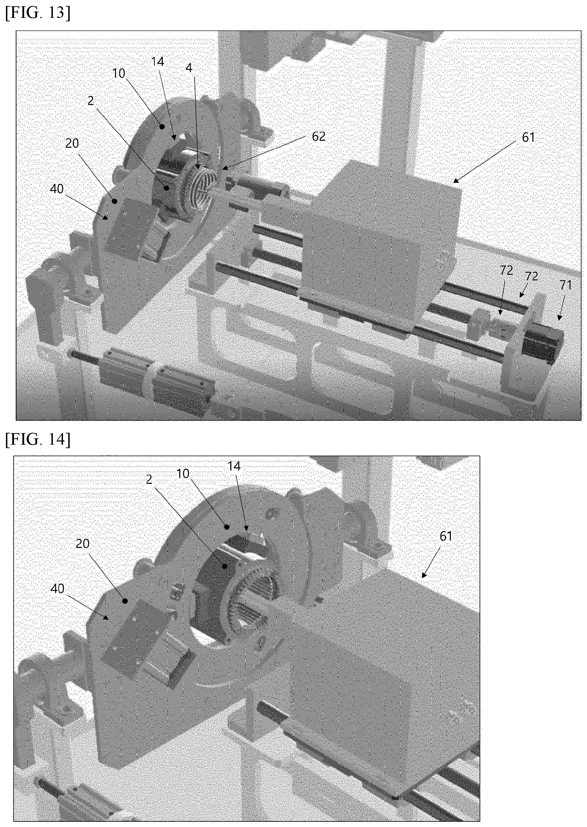

As illustrated in FIGS. 13 and 14, as the driving motor 71 of the moving unit rotates, the high frequency wave generator 61 is moved toward the stator 1 in the direction of the axis A by the screw unit 73.

As the high frequency wave generator 61 moves, the high frequency wave coil 62 is disposed on the leading ends 4 of the hairpins or the connection portions 5 of the hairpins and applies high frequency waves, and the coated varnish on the hairpins is cured.

When the varnish is completely cured, the heating unit 60 retracts, the transfer robot or the worker holds the stator 1, and the support pads 14 retract outward in the diameter direction.

Accordingly, the stator 1 supported by the first support unit 10 may be released and unloaded from the impregnation device of the embodiment by the transfer robot or the worker. Then, the process of impregnating with the varnish using the impregnation device of the embodiment is completed.

As described above, the exposed portions of the hairpins of the stator and the empty spaces between the hairpins and the core are coated with the varnish, and the varnish is cured to gel using the impregnation device according to the embodiment of the present invention.

Although the configuration and operation of the impregnation device of the embodiment according to one aspect of the present invention have been described above, the embodiment is merely one example, the present invention may be variously changed and modified, and components may be added thereto within the scope in the appended claims.

## Claims

1. An impregnation device that impregnates portions of hairpins, mounted in a stator of an electric motor and exposed from both end portions of the stator in a longitudinal direction, with a varnish, the impregnation device comprising:
a first support unit which is in contact with an outer circumferential surface of a stator core and supports the stator;
a second support unit to which the first support unit is mounted to be rotatable about an axis of the stator;
a first rotating unit which rotates the first support unit about an axis of the stator core;
a heating unit which passes through the stator core, moves in an axial direction of the stator core, is disposed around portions of hairpins exposed from both end portions of the stator core in a longitudinal direction, and heats the portions of the hairpins;
a moving unit which moves the heating unit in the axial direction of the stator core; and
a coating unit which coats the portions of the hairpins, which are exposed from both end portions of the stator core in the longitudinal direction, with a varnish,
wherein, in a state in which the stator is supported by the first support unit, while the first support unit is rotated by the first rotating unit to rotate the stator about the axis, the coating unit coats the portions of the hairpins, which are exposed toward any one side of the stator core in the longitudinal direction, with the varnish,
the first support unit includes a main body having a ring shape whose center is the axis of the stator core, wherein a through-hole formed inside the main body to accommodate the stator core, and a plurality of support pads formed in the through hole to be spaced apart from each other in a circumferential direction that move in a diameter direction toward the outer surface of the stator core,
the first support unit includes a first ring constituting the main body and a second ring which is disposed parallel to the first ring in the axial direction, formed in a ring shape whose center is the axis of the stator core, and provided to be rotatable about the axis of the stator core with respect to the first ring,
a second rotating unit which rotates the second ring with respect to the first ring is provided,
the support pads are disposed in and coupled to the first ring to be movable in the diameter direction and pressed by elastic members provided in the first ring to be brought into contact with the outer surface of the stator core, and
cam grooves provided in the second ring, that are inclined and operated to press the support pads outward in the diameter direction by rotation of the second ring with respect to the first ring, such that the support pads are spaced apart from the stator core, wherein a guide member is provided in each of the support pads, inserted into each of the cam grooves and moved along the cam groove in the diameter direction according to the rotation of the second ring with respect to the first ring.

2. The impregnation device of claim 1, wherein:
an outer surface of the first support unit is formed as a circular circumferential surface; and
a plurality of bearing units, which are in contact with circumferential surfaces of the first ring and the second ring of the first support unit and perform rolling movement and of which both sides in the width direction protrude to prevent separation of the first ring and the second ring and support rotation movement of the first support unit, are provided on the second support unit to be spaced apart from each other in the circumferential direction.

3. The impregnation device of claim 1, wherein:
the second support unit is rotatable such that the axis of the stator core is tilted with respect to a ground surface; and
the impregnation device further comprises a third rotating unit which rotates the second support unit such that the axis of the stator core is tilted with respect to the ground surface.

4. The impregnation device of claim 3, further comprising a support frame disposed on the ground surface, wherein:
the second support unit includes a rotating shaft which is disposed parallel to the ground surface and perpendicular to the axis of the stator core and a rotating arm which is disposed on the support frame to be rotatable about the rotating shaft and rotated with the rotating shaft; and
the third rotating unit is configured to rotate the second support unit by pushing or pulling the rotating arm with respect to the support frame.

5. The impregnation device of claim 1, wherein, in a state in which the stator core is supported by the first support unit,
while the first support unit is rotated about the axis of the stator core by the first rotating unit, the coating unit coats the portions of the hairpins, which are exposed toward the any one side of the stator core in the longitudinal direction, with the varnish; and
the heating unit moves in the axial direction of the stator core to the portions of the hairpins coated with the varnish and heats and cures the varnish.
